# EUROPEAN PATENT SPECIFICATION

(11) **EP 3 084 172 B1**
(45) Date of publication and mention of the grant of the patent: **11.08.2021**
(21) Application number: 14877849.1
(22) Date of filing: 26.11.2014
(51) Int. Cl.: F02C 3/04, F02C 7/36, F02K 3/06, F02C 3/107

(54) **ULTRA HIGH OVERALL PRESSURE RATIO GAS TURBINE ENGINE**
GASTURBINENMOTOR MIT ULTRAHOHEM GESAMTDRUCKVERHÄLTNIS
MOTEUR À TURBINE À GAZ À RAPPORT DE PRESSION GLOBAL EXTRÊMEMENT ÉLEVÉ

(30) Priority: 19.12.2013 US 201361918023 P; 03.01.2014 US 201414146758
(43) Date of publication of application: 26.10.2016
(73) Proprietor: Raytheon Technologies Corporation, Farmington, CT 06032 (US)
(72) Inventor: SCHWARZ, Frederick M., Glastonbury, Connecticut 06033 (US); STAUBACH, Joseph Brent, Colchester, Connecticut 06415 (US)
(74) Representative: Dehns
(86) International application number: PCT/US2014/067529
(87) International publication number: WO 2015/105594

(56) References cited:
- EP-A2- 2 177 735
- WO-A1-2015/031143
- FR-A1- 2 121 524
- US-A- 3 861 139
- US-A1- 2005 226 720
- US-A1- 2008 148 708
- US-A1- 2012 167 587
- US-B2- 6 701 717
- None

## Description

### BACKGROUND OF THE INVENTION

This application relates to a gas turbine engine having three turbine sections.

Gas turbine engines are known and typically include a fan delivering air as propulsion air into a bypass duct and also into a core engine flow where it passes to a compressor. There may be two compressor stages and the air may be compressed and delivered into a combustor section where it may be mixed with fuel and ignited.

Products of the combustion can pass downstream over turbine rotors.

There are two basic architectures in gas turbine engines. In one, there are two turbine stages with a downstream fan drive turbine driving a lower pressure compressor and the fan. In a second architecture, there are three turbines with one driving the fan alone, one driving a lower pressure compressor, and one driving a high pressure compressor.

In both of the foregoing conventional architectures, the fan drive turbine has rotated at the same speed as the fan. More recently, gear reductions have been proposed between the fan drive turbine and the fan.

A prior art gas turbine engine is disclosed in EP-2,177,735. Another prior art gas turbine engine is disclosed in FR-2,121,524.

### SUMMARY OF THE INVENTION

According to the present invention, there is provided a gas turbine engine as claimed in claim 1.

Features of embodiments are recited in the dependent claims.

These and other features may be best understood from the following drawings and specification.

### BRIEF DESCRIPTION OF THE DRAWINGS

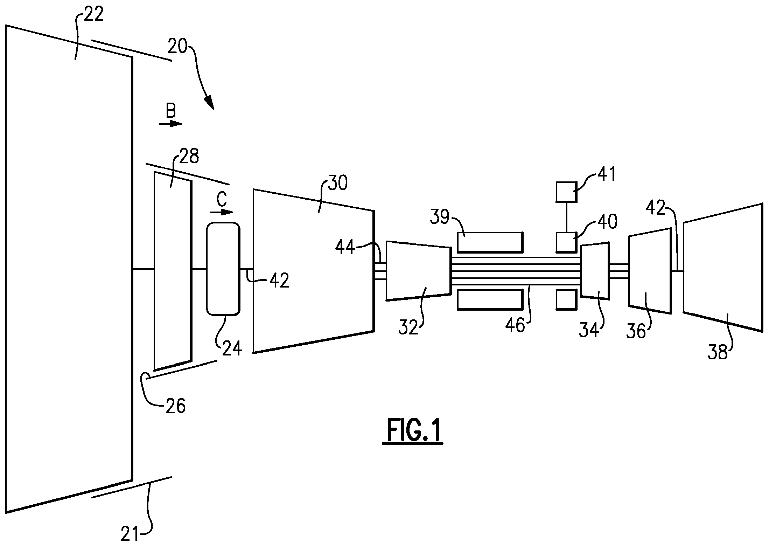

Figure 1 schematically shows a gas turbine engine incorporating a unique architecture.

### DETAILED DESCRIPTION

A gas turbine engine 20 is schematically illustrated in Figure 1. A fan 22 rotates within a nacelle or housing 21 and delivers air as bypass air B which provides propulsion to an aircraft carrying the engine 20. The fan also delivers air into a core flow as core air flow C. The core air flow reaches a first stage compressor 28. This may be seen as a booster compressor. The compressor 28 compresses the air and delivers it into a second stage compressor 30 and, then, into a third stage compressor 32.

The compressed air is delivered into a combustion section 39, shown schematically, and products of this combustion pass downstream across a first higher pressure turbine 34, a second intermediate pressure turbine 36, and a third lower pressure turbine 38. The lower pressure turbine 38 is a fan drive turbine and includes a shaft 42 that drives the first compressor 28 and the fan 22 through a gear reduction 24. Thus, first compressor 28 and fan 22 rotate at a slower speed than the lower pressure turbine 38. The intermediate turbine 36 drives the compressor 30 through a shaft 44.

The higher pressure turbine 34 drives the higher pressure compressor 32 through a shaft 46.

In embodiments, the turbine 34 may have a single stage, the turbine 36 may have one to three stages, and the turbine 38 may have three to six stages. A pressure ratio provided across the combination of the compressors 30 and 32 may be greater than or equal to about 31.5 and less than or equal to about 64.0. The compressor 30 may provide a pressure ratio of greater than or equal to about 8.0 and less than or equal to about 10.0. The compressor 32 may provide a pressure ratio of greater than or equal to about 4.0 and less than or equal to about 6.0. A compression ratio across the compressor 28 may be less than or equal to about 1.2. The pressure ratios are at sea level take off.

An overall pressure ratio across all three compressors 28, 30, 32 is greater than or equal to about 35 and is less than or equal to about 75.

Notably, an optional variable turbine vane 40 is shown schematically downstream of the combustor 39 and upstream of the turbine 34. This vane 40 can be utilized to reduce the overall pressure ratio, such as at take-off conditions where it would be desirable to have a lower pressure ratio. This is valuable as the overall pressure ratio can be extremely high at cruise (when air entering the engine has a total temperature of around 0.0 degrees Fahrenheit (-18°C)) and lower during take-off (where air entering the engine is at higher temperatures), thereby enabling the temperature levels in rear sections of the high pressure compressor to be similar during both flight conditions.

A control 41 is shown, and may change the flow area of the variable turbine vane 40 to be open at takeoff and climb and closed during cruise. At cruise, with the vane closed, the compressor is back-pressured by the resistance to flow downstream to the turbine 34. In turn this will increase the overall pressure ratio during cruise. The complexity of this system lends itself to a very long range aircraft where reducing cruise fuel consumption is of paramount importance from a economic standpoint.

A gear ratio for the gear reduction 24 is greater than or equal to about 2.6. A bypass ratio is defined as the volume of air delivered as bypass air B compared to the volume of air delivered into the core air flow C. The bypass ratio may be greater than or equal to about 6.0.

The disclosed architecture has valuable benefits in providing the third compressor 28 to provide some of the work. By providing the booster compressor 28 and providing more work at the compressor 30, the compressor 32 may rotate at slower speeds and, thus, the compressor 32 has less stress as compared to conventional three-spool engines. Moreover, as a result of the reduction in rotational stress, the compressor 32 can experience higher temperatures at a downstream end.

Accordingly, applicant has discovered that by shifting more of the work burden to the lower pressure compressor 30, the speed of the downstream compressor 32 may be reduced even though it is generally seen as highly desirable from an aerodynamic efficiency standpoint, and a compressor stability standpoint and in order to reduce the number of compressor stages, for a compressor to be designed with as much speed capability as possible. This is because even though there are benefits to increased compressor speed, there are also countering trends that can sharply reduce the gains from endlessly increasing the speed of the downstream compressor.

One countering trend involves the mass of the disks throughout the downstream compressor, particularly in their bore areas to hold together at the high speeds and high temperatures. This disk mass in turn adds substantially to a transient thermal mismatch between the disks and engine casing during engine acceleration and deceleration. Rotor tip clearances become particularly large relative to the compressor blade height at the last stage of this compressor owing to high temperature excursions there. The tip clearance there is especially critical because that stage is the smallest in the engine and the open clearance represents a large percentage of the total flowpath annulus and therefore an inordinately large efficiency loss due to air returning to the upstream flowpath by going around the tip.

A slower speed in the last rotor of the downstream compressor allows an achievement of higher overall pressure ratio, by shifting speed (and stages) to the upstream compressor 30. At the same time, the speed of the downstream compressor 32 has historically been a limit on overall achievable pressure ratio of about 50 for long range, twin aisle aircraft where the use of takeoff power is infrequent in the overall duty cycle of the engine. For shorter range, single aisle aircraft (often termed "regional jets"), the use of takeoff power is more frequent so the OPR might be limited to 40 or even less owing to durability concerns for the upstream turbine stages. This downstream location sees very high stress levels, especially at take-off and climb conditions, but the absolute level of stress that can be tolerated is increased if, at the elevated compressor exit temperature, and OPR, the speed is reduced. So reduced downstream compressor speed has at least two benefits: (a) reduced clearances; and (b) increased overall pressure ratio.

Naturally, as speed relationships between the upstream 30 and downstream 32 compressors are revised, the pressure rise across the compressors must also be revised. In addition, there are improvements to be made in turbine durability which, for any characteristic material temperature capability is also a function of the overall pressure ratio. A high overall pressure ratio is desired for better thermal efficiency for a long range engine application such as the use of an engine on a twin aisle aircraft with average flight times of six hours. This engine has fewer takeoffs relative to the time at cruise, so the high overall pressure ratio, impacting both the turbine gas path air and the turbine cooling air can still result in acceptable turbine life. This is in contrast to a single aisle aircraft application.

In contrast, the lower overall pressure ratio would result in optimum commercial engine economics for a shorter mission aircraft, most likely with a single aisle and medium passenger numbers below 240. This is so because even though the overall pressure ratio is somewhat lower (thereby increasing fuel burn), the extended turbine life benefits the aircraft economics to such an extent that it makes up for the less remarkable fuel burn.

In addition, the architecture disclosed herein can provide additional flexibility to provide a family of gas turbine engines where some models have the booster compressor 28 and some models are modified to operate without the booster.

As an example, should an aircraft suggest a gas turbine engine with a lower thrust owing to the lower maximum takeoff gross weight , the booster compressor 28 may be eliminated and the remaining architecture utilized with the fan drive turbine 38 driving only the fan 22 through a gear reduction 24.

This provides economic benefits in reducing engineering and development costs and inventory issues for the manufacturer of gas turbine engines. The same manufacturer could realize production efficiencies by then offering a higher thrust model, with the booster compressor, that would serve a higher gross weight aircraft with very few changes in the rest of the engine.

The two aircraft might require quite different sea-level takeoff thrusts and the engines might appear to be quite different in fan diameter size and the external components such as wire harnesses and cabin pressurization plumbing and valves. But, there would be large development and inventory savings in all parts in the core engine designated as module 30, 32, 40, 42 and perhaps even 38.

These modules represent the greatest portion of the manufacturer's development cost, production cost, inventory costs, warranty costs and overhaul costs and so commonality is a great benefit.

A method of designing a gas turbine engine not covered by the claims comprises the steps of providing for a first turbine, providing for a second turbine, configuring the first turbine to drive a first compressor, and configuring the second turbine to drive a second compressor. The first turbine, second turbine, first compressor and second compressor are designed to cooperate with an optional third turbine configured to drive at least one of an optional third compressor and a fan through an optional gear reduction. A determination is made whether or not to include the optional third turbine, third compressor and gear reduction.

The design includes the optional third turbine, third compressor and gear reduction. The resulting engine is configured to have about 80% common parts aft of a flange at the front of an intermediate pressure compressor.

As an example, with this method, as much as 80% of both engines aft of a flange in front of the intermediate compressor 30 can be common.

The engine 20 in one example is a high-bypass geared aircraft engine. In a further example, the engine 20 bypass ratio is greater than about six, with an example embodiment being greater than about ten. The geared architecture 24 is an epicyclic gear train, such as a planetary gear system or other gear system, with a gear reduction ratio of greater than about 2.3 and the low pressure turbine 38 has a pressure ratio that is greater than about five. In one disclosed embodiment, the engine 20 bypass ratio is greater than about ten, the fan diameter is significantly larger than that of the low pressure compressors 28/30, and the low pressure turbine 38 has a pressure ratio that is greater than about five. Low pressure turbine 38 pressure ratio is pressure measured prior to inlet of low pressure turbine 38 as related to the pressure at the outlet of the low pressure turbine 38 prior to an exhaust nozzle. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10.7 km). The flight condition of 0.8 Mach and 35,000 ft (10.7 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = °K x 9/5). The "Low corrected fan tip speed" as disclosed herein according to one non-limiting embodiment is less than about 1150 ft / second (351 m/s).

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) for an aircraft, the gas turbine engine (20) comprising:
a first turbine (34) positioned upstream of a second intermediate turbine (36) and a third turbine (38) being positioned downstream of the first and second turbines (34, 36);
a fan (22); and
three compressors (28, 30, 32), with a first upstream one of said compressors (28) being connected to rotate with said fan (22), and said third turbine (38) for driving said upstream compressor (28) and said fan (22) both through a gear reduction (24), and a second intermediate compressor (30) for being driven by said second intermediate turbine (36), and a third compressor (32) downstream of said first and second compressors (28, 30) and for being driven by said first turbine (34), wherein said fan (22) delivers air into a bypass duct as propulsion air and delivers air to said first compressor (28) as core air flow (C), and an overall pressure ratio at sea level take off across said three compressors (28, 30, 32) is greater than or equal to about 35.0 and is less than or equal to about 75.0.

2. The gas turbine engine (20) as set forth in claim 1, wherein a variable turbine vane (40) is positioned upstream of said first turbine (34) to allow the selective control of said overall pressure ratio.

3. The gas turbine engine (20) as set forth in claim 2, wherein said variable turbine vane (40) is utilized to reduce said overall pressure ratio at take-off conditions.

4. The gas turbine engine (20) as set forth in claim 1, 2 or 3, wherein a pressure ratio across the second and third compressors (30, 32) at sea level take off is greater than or equal to about 31.5 and less than or equal to about 64.0.

5. The gas turbine engine (20) as set forth in any preceding claim, wherein said second compressor (30) provides a compression ratio greater than or equal to about 8.0 and less than or equal to about 10.0.

6. The gas turbine engine (20) as set forth in any preceding claim, wherein said third compressor (32) provides a compression ratio of greater than or equal to about 4.0 and less than or equal to about 6.0.

7. The gas turbine engine (20) as set forth in any preceding claim, wherein said upstream compressor (28) provides a compression ratio less than or equal to about 1.2.

## Patentansprüche

1. Gasturbinentriebwerk (20) für ein Luftfahrzeug, wobei das Gasturbinentriebwerk (20) Folgendes umfasst:
eine erste Turbine (34), die stromaufwärts einer zweiten Zwischenturbine (36) positioniert ist, und eine dritte Turbine (38), die stromabwärts der ersten und der zweiten Turbine (34, 36) positioniert ist;
ein Gebläse (22); und
drei Verdichter (28, 30, 32), wobei ein erster stromaufwärtiger der Verdichter (28) verbunden ist, um sich mit dem Gebläse (22) zu drehen, und die dritte Turbine (38) zum Antreiben des stromaufwärtigen Verdichters (28) und des Gebläses (22) beide durch ein Untersetzungsgetriebe (24), und einen zweiten Zwischenverdichter (30), um durch die zweite Zwischenturbine (36) angetrieben zu werden, und einen dritten Verdichter (32) stromabwärts des ersten und des zweiten Verdichters (28, 30) und um durch die erste Turbine (34) angetrieben zu werden, wobei das Gebläse (22) Luft in einen Umgehungskanal als Antriebsluft liefert und Luft an den ersten Verdichter (28) als Kernluftstrom (C) liefert, und ein Gesamtdruckverhältnis beim Abheben auf Meeresspiegelniveau über die drei Verdichter (28, 30, 32) größer als oder gleich etwa 35,0 ist und kleiner als oder gleich etwa 75,0 ist.

2. Gasturbinentriebwerk (20) nach Anspruch 1, wobei eine variable Turbinenschaufel (40) stromaufwärts der ersten Turbine (34) positioniert ist, um die selektive Steuerung des Gesamtdruckverhältnisses zu ermöglichen.

3. Gasturbinentriebwerk (20) nach Anspruch 2, wobei die variable Turbinenschaufel (40) verwendet wird, um das Gesamtdruckverhältnis bei Abhebebedingungen zu reduzieren.

4. Gasturbinentriebwerk (20) nach Anspruch 1, 2 oder 3, wobei ein Druckverhältnis durch den zweiten und den dritten Verdichter (30, 32) beim Abheben auf Meeresspiegelniveau größer als oder gleich etwa 31,5 und kleiner als oder gleich etwa 64,0 ist.

5. Gasturbinentriebwerk (20) nach einem vorhergehenden Anspruch, wobei der zweite Verdichter (30) ein Verdichtungsverhältnis bereitstellt, das größer als oder gleich etwa 8,0 und kleiner als oder gleich etwa 10,0 ist.

6. Gasturbinentriebwerk (20) nach einem vorhergehenden Anspruch, wobei der dritte Verdichter (32) ein Verdichtungsverhältnis von mehr als oder gleich etwa 4,0 und weniger als oder gleich etwa 6,0 bereitstellt.

7. Gasturbinentriebwerk (20) nach einem vorhergehenden Anspruch, wobei der stromaufwärtige Verdichter (28) ein Verdichtungsverhältnis von weniger als oder gleich etwa 1,2 bereitstellt.

## Revendications

1. Moteur à turbine à gaz (20) pour un aéronef, le moteur à turbine à gaz (20) comprenant :
une première turbine (34) positionnée en amont d'une deuxième turbine intermédiaire (36) et une troisième turbine (38) étant positionnée en aval des première et deuxième turbines (34, 36) ;
une soufflante (22) ; et
trois compresseurs (28, 30, 32), un premier en amont desdits compresseurs (28) étant relié pour tourner avec ladite soufflante (22), et ladite troisième turbine (38) pour entraîner ledit compresseur amont (28) et ladite soufflante (22) tous deux par l'intermédiaire d'un réducteur (24), et un deuxième compresseur intermédiaire (30) destiné à être entraîné par ladite deuxième turbine intermédiaire (36) et un troisième compresseur (32) en aval desdits premier et deuxième compresseurs (28, 30) et destiné à être entraîné par ladite première turbine (34), dans lequel ladite soufflante (22) fournit de l'air dans un conduit de dérivation en tant qu'air de propulsion et fournit de l'air audit premier compresseur (28) en tant qu'écoulement d'air central (C), et un rapport de pression global au décollage au niveau de la mer entre lesdits trois compresseurs (28, 30, 32) est supérieur ou égal à environ 35,0 et est inférieur ou égal à environ 75,0.

2. Moteur à turbine à gaz (20) selon la revendication 1, dans lequel une aube de turbine variable (40) est positionnée en amont de ladite première turbine (34) pour permettre la commande sélective dudit rapport de pression global.

3. Moteur à turbine à gaz (20) selon la revendication 2, dans lequel ladite aube de turbine variable (40) est utilisée pour réduire ledit rapport de pression global en conditions de décollage.

4. Moteur à turbine à gaz (20) selon la revendication 1, 2 ou 3, dans lequel un rapport de pression à travers les deuxième et troisième compresseurs (30, 32) au décollage au niveau de la mer est supérieur ou égal à environ 31,5 et inférieur ou égal à environ 64,0.

5. Moteur à turbine à gaz (20) selon une quelconque revendication précédente, dans lequel ledit deuxième compresseur (30) fournit un taux de compression supérieur ou égal à environ 8,0 et inférieur ou égal à environ 10,0.

6. Moteur à turbine à gaz (20) selon une quelconque revendication précédente, dans lequel ledit troisième compresseur (32) fournit un taux de compression supérieur ou égal à environ 4,0 et inférieur ou égal à environ 6,0.

7. Moteur à turbine à gaz (20) selon une quelconque revendication précédente, dans lequel ledit compresseur amont (28) fournit un taux de compression inférieur ou égal à environ 1,2.
